# EUROPEAN PATENT SPECIFICATION

(11) **EP 1 810 543 B1**
(45) Date of publication and mention of the grant of the patent: **30.11.2011**
(21) Application number: 05800026.6
(22) Date of filing: 13.10.2005
(51) Int. Cl.: H04W 72/12

(54) **A method of uplink transmission in a mobile terminal in soft handover**
Verfahren zur Aufwärtsstreckenübertragung in einem mobilen Endgerät beim Soft-Handover
Procédé de liaison montante pour un terminal mobile avec transfert intercellulaire sans coupure

(30) Priority: 10.11.2004 GB 0424809
(43) Date of publication of application: 25.07.2007
(73) Proprietor: SIEMENS AKTIENGESELLSCHAFT, 80333 München (DE)
(72) Inventor: HULBERT, Anthony Peter, Southampton Hampshire SO16 3DF (GB); CHAPMAN, Thomas Malcolm, Southampton Hampshire SO18 4RY (GB); BOOKER, Philip, Southampton Hampshire SO17 1ER (GB); KRAUSE, Jörn, 12107 Berlin (DE)
(74) Representative: Payne, Janice Julia
(86) International application number: PCT/GB2005/003947
(87) International publication number: WO 2006/051254

(56) References cited:
- US-A1- 2004 219 917
- US-A1- 2004 219 920
- "3rd Generation Partnership Project; Technical Specification Group radio Access Network; FDD Enhanced Uplink; Overall description; Stage 2 (Release 6)" 3GPP TS 25 309 V6.0.0, September 2004 (2004-09), pages 1-12, XP002361116

## Description

This invention relates to a method of uplink transmission in a mobile terminal in soft handover.

Enhanced uplink (E-DCH) is a package of features introduced into 3^{rd} generation project partnership (3GPP) Release 6 that aims to improve radio resource management in the uplink and hence to improve uplink throughput and reduce delay.

One of the key features introduced in E-DCH is node B scheduling. In this feature, the base station or node B is given autonomy to restrict, using layer 1 signalling, the data rate at which E-DCH enabled terminals may transmit in order to manage at least a portion of its wideband code division multiple access (WCDMA) interference. To facilitate node B scheduling, information is required to be sent by the mobile terminal or user equipment (UE) to the node B. This information may be sent using separate physical layer signalling, or as a header included with E-DCH data packets.

A further enhancement is hybrid automatic repeat request (HARQ). In HARQ, the terminal transmits to the node B, which checks to see if it has received the transmission correctly. In the event that the node B does not correctly receive the transmission, the node B signals to the terminal using physical layer signalling that the transmission was not received and the terminal retransmits the data. Otherwise the node B indicates using the physical layer signalling that the transmission was correctly received and the terminal may transmit a new data block.

Some terminals will be in inter-node B soft handover (SHO), which means that the uplink transmission is received by a number of node Bs. As soon as one of the node Bs indicates that it has correctly received a data block, the terminal may start to transmit a new block, even though the remaining node Bs never received the block correctly. In such a soft handover situation, at least one node B may be designated as a primary node B responsible for scheduling, and this node B needs to receive the scheduling information. HARQ techniques during soft handoff are described in US 2004/02/9917.

The problem is that in SHO, when scheduling information is included, one or more scheduling node Bs may not be the node B that correctly receives the E-DCH block. Hence if the terminal behaviour is to stop transmitting as soon as one of the node Bs acknowledges receipt, there exists the risk that the scheduling node B(s) does not receive scheduling information that is included as a header with the E-DCH transmission block.

A method of uplink transmission in a mobile terminal in soft handover, the method comprising determining whether a data block to be transmitted includes scheduling information; if it does, determining a set of one or more base stations to which the scheduling information is directed; and monitoring for an acknowledgment at the mobile terminal from the or each scheduling base station in the set; wherein the mobile terminal continues to transmit the scheduling information until all the scheduling base stations have acknowledged receipt.

By distinguishing between scheduling information and other data, then requiring the mobile terminal to obtain an acknowledgement from all base stations which need the scheduling information, before the terminal stops sending the information, the scheduling base stations receive the information that they require.

Preferably, the mobile terminal interleaves retransmissions with other data transmissions.

This allows other data to be transmitted whilst acknowledgments for the scheduling information are awaited.

Although the scheduling information can be resent with a retransmission of the original data, an alternative is that the scheduling information is added to subsequent data blocks for retransmission.

The choice of method depends upon the original probability of success for the transmission.

Preferably, if multiple copies of the data blocks are transmitted from a base station to a network, the network only takes account of the data block having the lowest retransmission number.

The block with the lowest retransmission number is the block that is likely to have the least number of errors in it, i.e. it did not need to be retransmitted as a block with a higher retransmission number.

Alternatively, only scheduling base stations forward data blocks including scheduling information to the network

This allows the network to assume that any scheduling information has been received by the respective scheduling base station, so the network can take account of any such data blocks received.

Preferably, the mobile terminal ignores acknowledgements from base stations outside the scheduling set.

Although base stations outside the scheduling set are not required to acknowledge, some may send acknowledgments, so the mobile terminal is set up to ignore these.

In accordance with a second aspect of the present invention, a mobile terminal capable of operating in soft handover, wherein the mobile terminal includes means to transmit blocks including scheduling information; and means to receive acknowledgements from scheduling base stations; and wherein the mobile terminal comprises means to differentiate between data blocks including scheduling information and data blocks which do not include scheduling information, whereby blocks which include scheduling information continue to be retransmitted until an acknowledgement has been received from the or each scheduling base station.

In accordance with a third aspect of the present invention, a communication system comprises a mobile terminal according to the second aspect; a plurality of base stations and a network. The scope of the invention is defined by the appended independent claims.

An example of a method of uplink transmission in a mobile terminal in soft handover in accordance with the present invention will now be described with reference to the accompanying drawings in which:
Figure 1 is a block diagram of a communication system with a mobile terminal in soft handover;
Figure 2a illustrates conventional acknowledgment procedure for such a system;
Figure 2b illustrates a first example of the method of the present invention;
Figure 3a illustrates a first option for retransmission of scheduling data blocks suitable for the method of Fig 2b; and,
Figure 3b illustrates a second option for retransmission of scheduling data blocks suitable for the method of Fig 2b.

Signalling information intended for a node B in a header to a transport data block in soft handover is a new concept for the 3GPP standards, as is the use of HARQ in the uplink, so the problem of using HARQ for enhanced dedicated channel have not been considered to date.

The present invention modifies the UE behaviour such that the behaviour on receiving an acknowledgement of a received block differs between blocks that include scheduling information and blocks that do not. Blocks that do not include scheduling information are treated in the conventional manner as described previously, but if a block contains scheduling information, the UE disregards acknowledgements from node Bs that do not need the scheduling information. Although, these node Bs do not need to send an acknowledgement, they sometimes do. The UE continues to retransmit the block until the node B(s) responsible for scheduling sends a positive acknowledgement. As this procedure might result in the RNC receiving the same block more than once with a different retransmission number, the RNC only takes into account the block with the lowest retransmission number for outer loop power control and uplink data reception. An alternative is to have a different outer loop power control behaviour between blocks that include scheduling information and blocks that do not include scheduling information.

Another option is to cause non-serving Node Bs to refrain from forwarding blocks that include scheduling information to the RNC. However, there may be situation where the radio conditions to the serving Node B are not good and the scheduling node B continues to have problems with receiving scheduling information. In this case, either the RNC can decide to change the serving cell or the UE stops transmitting, so that scheduling information can be sent, either the UE stops autonomously or the network causes it to stop. The present invention addresses the problem of soft handover where signalling to a subset of the active set, i.e. all Node Bs in SHO, is put on the data blocks which are selectively combined in the RNC.

The invention provides special UE behaviour in blocks that contain signalling, so that only a subset of node Bs are monitored for acknowledgements and the UE continues retransmissions until acknowledgements are received from ALL or the relevant node Bs. If scheduling signalling is received by a node B, and the node B is not the intended recipient of this information, then the node B does not send any-HARQ acknowledgement to the UE. The network is made aware of blocks that contain signalling, so that these can be treated differently in the context of outer loop power control.

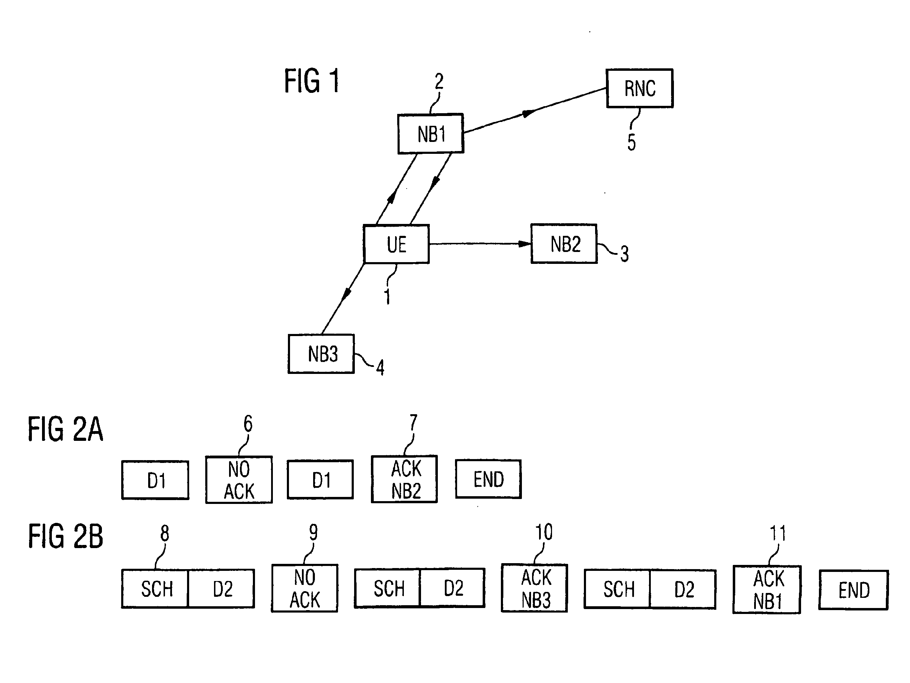

Fig. 1 illustrates one example, in which a UE 1 is in soft handover with 3 node Bs, NB1, NB2 and NB3 denoted by references 2, 3 and 4 respectively. Only NB1 is responsible for scheduling the UE and so has a connection to the network through a radio network controller (RNC) 5. When the UE 1 transmits an E-DCH data block D1 that does not include scheduling information, then the following behaviour occurs, shown by Fig. 2a. The UE 1 makes a first transmission of the data block D1, but none of the node Bs send an acknowledgement 6, so the UE makes a retransmission of D1. This time, NB2 acknowledges receipt 7 of the transmission, so the UE does not transmit any more repeats of that block.
Fig. 2b shows an example in which the UE 1 includes a header 8 incorporating some scheduling information in the data block and some data D2. In this case, the UE makes a first transmission of the block, which is correctly received by NB2, but as NB2 recognises that the data block has a signalling header, NB2 does not send an acknowledgement 9 and the UE retransmits the block. This time NB3 receives the block correctly, but for some reason transmits an acknowledgement 10. However, the UE ignores this acknowledgment from NB3, because it is not a scheduling node and so retransmits the block again. NB1 now receives the block correctly and sends an acknowledgement 11, so the UE does not make any further retransmissions. Although, both the block acknowledged by NB3 and the block acknowledged by NB1 may be forwarded to the RNC 5, the RNC is made aware that the block had some signalling header information, and so does not take this block into account in the outer loop power control.

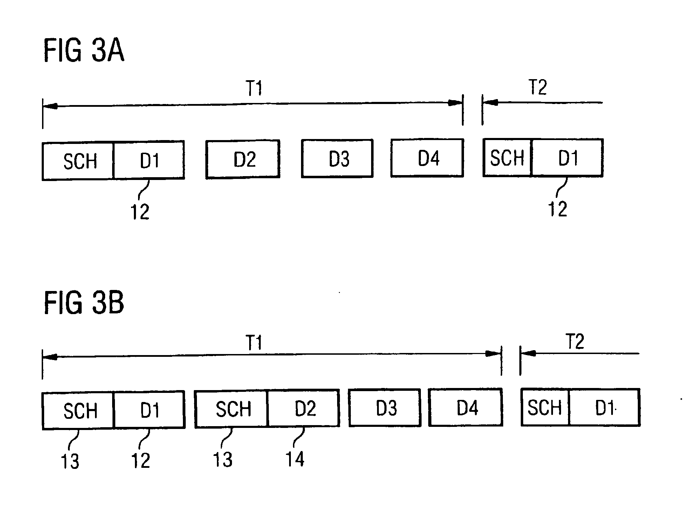

Fig. 3 illustrates how the retransmission can be incorporated into the UEs transmissions. In Fig. 3a, the probability of successful receipt of a data block 12 with scheduling information is considered to be high, so if no acknowledgement of the scheduling information is received, then other data is sent D2, D3 and D4 in the remainder of time slot T1 and block 12 with its scheduling header is resent at the beginning of the next time period T2.

If however, the probability of successful receipt is considered to be low, then there is no particular benefit to resending the same block and header, so, as shown in Fig. 3b, scheduling information 13 is sent with the first data block 12, but when no acknowledgment is received, the scheduling information 13 is added to the next data block D2, 14 and resent. Optionally, this can be combined with resending in the second time period.

There may be some benefit in keeping non-serving node Bs informed of the intentions of the UE, so the set of node Bs which need to acknowledge could be defined more broadly than just the serving node Bs.

## Claims

1. A method of uplink transmission in a mobile terminal in soft handover, the method comprising determining whether a data block to be transmitted includes scheduling information, if it does, determining a set of one or more base stations to which the scheduling information is directed; and monitoring for an acknowledgment at the mobile terminal from each scheduling base station in the set **characterized by** mobile terminal continuing to transmit the scheduling information until all the scheduling base stations have acknowledged receipt.

2. A method according to claim 1, wherein the mobile terminal interleaves retransmissions with other data tranmissions.

3. A method according to claim 1, wherein the scheduling information is added to subsequent data blocks for retransmission.

4. A method according to any preceding claim, wherein, if multiple copies of the data blocks are transmitted from a base station to a network, the network only takes account of the data block having the lowest retransmission number.

5. A method according to claim 5, wherein only scheduling base stations forward data blocks including scheduling information to the network

6. A method according to any preceding claim, wherein the mobile terminal ignore acknowledgements from base station outside the scheduling set.

7. A mobile teminal capable of operating in soft bandover, wherein the mobile terminal includes means to transmit blocks including scheduling information: and means to receive acknowledgements from scheduling base stations; and wherein the mobile terminal comprises means to differentiate between data blocks including scheduling information and data blocks which do not include scheduling information, means to determine a set of one or more base stations to which the scheduling information is directed, means to monitor for an acknowledgment from each Scheduling base station in the set **characterized by** blocks which include sheduling information continuing to be retransmitted until an acknowledgement has been received from each scheduling base station in the set.

8. A communication system comprising a mobile terminal according to claim 7; a plurality of base stations and a network.

## Patentansprüche

1. Verfahren für die Aufwärtstreckenübertragung bei einem mobilen Endgerät beim Soft Handover, wobei das Verfahren Folgendes umfasst: Bestimmen, ob ein zu übertragender Datenblock Verwaltungsinformationen enthält, Bestimmen eines Satzes aus einer oder mehreren Basisstationen, an die die Verwaltungsinformationen gerichtet sind, wenn dies der Fall ist, und Überwachen auf eine Bestätigung von jeder verwaltenden Basisstation des Satzes am mobilen Endgerät, **dadurch gekennzeichnet, dass** das mobile Endgerät weiterhin die Verwaltungsinformationen überträgt, bis alle verwaltenden Basisstationen den Empfang bestätigt haben.

2. Verfahren nach Anspruch 1, bei dem das mobile Endgerät erneute Übertragungen mit anderen Datenübertragungen verschachtelt.

3. Verfahren nach Anspruch 1, bei dem die Verwaltungsinformationen für die erneute Übertragung zu nachfolgenden Datenblöcken hinzugefügt werden.

4. Verfahren nach einem der vorhergehenden Ansprüche, bei dem ein Netzwerk, wenn mehrere Kopien der Datenblöcke von einer Basisstation an das Netzwerk übertragen werden, nur den Datenblock mit der niedrigsten Anzahl erneuter Übertragungen berücksichtigt.

5. Verfahren nach Anspruch 5, bei dem nur verwaltende Basisstationen Datenblöcke mit Verwaltungsinformationen an das Netzwerk weiterleiten.

6. Verfahren nach einem der vorhergehenden Ansprüche, bei dem das mobile Endgerät Bestätigungen von Basisstationen außerhalb des verwaltenden Satzes ignoriert.

7. Mobiles Endgerät, das im Soft Handover funktioniert, wobei das mobile Endgerät Mittel zum Übertragen von Blöcken mit Verwaltungsinformationen und Mittel zum Empfangen von Bestätigungen von verwaltenden Basisstationen aufweist und wobei das mobile Endgerät Folgendes umfasst: Mittel zum Differenzieren zwischen Datenblöcken mit Verwaltungsinformationen und Datenblöcken, die keine Verwaltungsinformationen enthalten, Mittel zum Bestimmen eines Satzes aus einer oder mehreren Basisstationen, an die die Verwaltungsinformationen weitergeleitet werden, Mittel zum Überwachen auf eine Bestätigung von jeder verwaltenden Basisstation des Satzes, **dadurch gekennzeichnet, dass** Blöcke, die Verwaltungsinformationen enthalten, weiterhin erneut übertragen werden, bis von jeder verwaltenden Basisstation des Satzes eine Bestätigung empfangen wurde.

8. Kommunikationssystem, das ein mobiles Endgerät nach Anspruch 7, mehrere Basisstationen und ein Netzwerk umfasst.

## Revendications

1. Procédé de liaison montante pour terminal mobile avec transfert intercellulaire sans coupure, le procédé consistant à déterminer si un bloc de données à transmettre comprend des informations de planification ; s'il en comprend, à déterminer une série d'une ou de plusieurs stations de base auxquelles les informations de planification sont adressées, et à être à l'écoute d'un accusé de réception sur le terminal mobile provenant de chaque station de base de la série se planifiant, **caractérisé en ce que** le terminal mobile continue de transmettre les informations de planification jusqu'à ce que toutes les stations de base se planifiant aient accusé réception.

2. Procédé selon la revendication 1, dans lequel le terminal mobile entrelace des retransmissions avec d'autres transmissions de données.

3. Procédé selon la revendication 1, dans lequel les informations de planification sont ajoutées à des blocs de données ultérieurs en vue d'une retransmission.

4. Procédé selon l'une quelconque des revendications précédentes, dans lequel, si de multiples copies de blocs de données sont transmises d'une station de base à un réseau, le réseau tient seulement compte du bloc de données ayant le nombre de retransmissions le plus bas.

5. Procédé selon la revendication 5, dans lequel seules les stations de base se planifiant transfèrent au réseau des blocs de données comprenant des informations de planification.

6. Procédé selon l'une quelconque des revendications précédentes, dans lequel le terminal mobile ignore les accusés de réception des stations de base ne faisant pas partie de la série se planifiant.

7. Terminal mobile capable de fonctionner avec transfert intercellulaire sans coupure, étant entendu que le terminal mobile comprend des moyens pour transmettre des blocs comprenant des informations de planification et des moyens pour recevoir des accusés de réception de stations de base se planifiant, et étant entendu que le terminal mobile comprend des moyens pour faire la différence entre des blocs de données comprenant des informations de planification et des blocs de données qui ne comprennent pas d'informations de planification, des moyens pour déterminer une série d'une ou de plusieurs stations de base auxquelles les informations de planification sont adressées, des moyens d'être à l'écoute d'un accusé de réception de chaque station de base de la série se planifiant, **caractérisé en ce que** les blocs qui comprennent des informations de planification, continuent à être retransmis jusqu'à ce qu'un accusé de réception ait été reçu de chaque station de base de la série se planifiant.

8. Système de communication comprenant un terminal mobile selon la revendication 7, une pluralité de stations de base et un réseau.
